(19) Europäisches Patentamt

European Patent Office

Office européen des brevets

(11) Veröffentlichungsnummer: **0 579 988 B1**

(12) **EUROPÄISCHE PATENTSCHRIFT**

(45) Veröffentlichungstag der Patentschrift: **08.03.95**

(51) Int. Cl.⁶: **C08G 18/42**, C08G 18/66, C08G 63/90, //(C08G18/42, 101:00),(C08G18/66,101:00)

(21) Anmeldenummer: **93110425.1**

(22) Anmeldetag: **30.06.93**

(54) **Verfahren zur Herstellung foggingarmer Polyesterpolyurethan-Weichschaumstoffe und ihre Verwendung in Verkehrsmitteln.**

(30) Priorität: **13.07.92 DE 4223014**

(43) Veröffentlichungstag der Anmeldung:
**26.01.94 Patentblatt 94/04**

(45) Bekanntmachung des Hinweises auf die Patenterteilung:
**08.03.95 Patentblatt 95/10**

(84) Benannte Vertragsstaaten:
**AT BE CH DE ES FR GB IT LI NL PT SE**

(56) Entgegenhaltungen:
**DE-A- 3 503 330**
**DE-A- 4 133 306**
**US-A- 4 591 629**

(73) Patentinhaber: **BAYER AG**

**D-51368 Leverkusen (DE)**

(72) Erfinder: **Naujoks, Manfred, Dipl.-Ing.**
**Kuckenberg 34a**
**D-51399 Burscheid (DE)**
Erfinder: **König, Klaus, Dr.**
**Zum Hahnenberg 40**
**D-51519 Odenthal (DE)**
Erfinder: **Schmidt, Manfred, Dr.**
**Zeisigstrasse 5**
**D-41540 Dormagen (DE)**
Erfinder: **Illger, Hans-Walter, Dr.**
**Hasenfeld 13**
**D-51503 Rösrath (DE)**
Erfinder: **Baatz, Günter, Dr.**
**Auf dem Knippen**
**D-51503 Rösrath (DE)**
Erfinder: **Rabe, Hansjürgen, Dr.**
**Am Domblick 20**
**D-51381 Leverkusen (DE)**

EP 0 579 988 B1

**Beschreibung**

Polyurethanweichschaumstoffe finden weitverbreitete Anwendung in Bereichen, in denen Polster- oder Dämpfungseigenschaften gefordert werden. Rohstoffseitig unterscheidet man aufgrund der Polyolbasis Ether- und Esterpolyurethanschaumstoffe.

Polyetherpolyurethanschaumstoffe werden vorwiegend zu Matratzen und Sitzpolstern weiterverarbeitet, während Polyesterpolyurethanschaumstoffe ihr wesentliches und traditionelles Anwendungsfeld im Automobilsektor haben.

Von den im Automobil verwendeten Polyesterpolyurethan-Weichschaumstoffen wird der größte Anteil (≧80 %) als laminierte Bahnenware im Verbund mit verschiedenen Deckmaterialien eingesetzt.

Bedeutende Anwendungen der laminierten Bahnenware sind Sitz-, Rücken- und Kopfpolsterauflagen sowie Dachhimmel.

Neben physikalisch-chemischen Eigenschaften wie Elastizität, hohe Zug- und Weiterreißfestigkeit, Lösemittelbeständigkeit und Schmelzklebrigkeit sprechen auch gravierende ökonomische sowie verfahrenstechnische Gründe für den Einsatz von Polyesterpolyurethanschaumstoffen für obengenannte Anwendungen.

Allerdings werden Substanzen, die aus den Polyesterpolyurethan-Schaumstoffen austreten und zu optisch sichtbaren Scheibenniederschlägen führen können, von Kunden in zunehmendem Maße als erheblicher technischer Mangel betrachtet.

Eine derartige Kondensation von flüchtigen Bestandteilen aus der Kfz.-Innenausstattung an den Innenflächen der Glasscheiben wird als "Fogging" bezeichnet.

Es handelt sich dabei um einen lichtstreuenden Niederschlag, welcher zu einer Sichtbehinderung, insbesondere bei schlechten Beleuchtungsverhältnissen, führt.

Die Automobilindustrie hat zwar schon versucht, diese Mängel durch Einsatz verbesserter Basiskunststoffe und Additive zu beheben, jedoch das Foggingproblem bisher noch nicht vollständig gelöst.

Das erfindungsgemäße Verfahren ergibt nun Polyesterpolyurethan-Weichschaumstoffe, die eine drastische Verminderung des Fogging-Effekts bewirken.

Gegenstand der vorliegenden Erfindung ist ein Verfahren zur Herstellung von foggingarmen Polyesterpolyurethan-Weichschaumstoffen durch Umsetzung von

a) Polyisocyanaten mit

b) mindestens zwei Hydroxylgruppen aufweisenden Polyestern vom Molekulargewicht 400 bis 10 000 in Gegenwart von

c) Wasser und/oder leicht flüchtigen organischen Verbindungen als Treibmittel und gegebenenfalls in Gegenwart von

d) mindestens zwei aktive Wasserstoffatome aufweisen-den Verbindungen vom Molekulargewicht 32 bis 400 als Kettenverlängerungs- und Vernetzungsmitteln sowie gegebenenfalls von

e) an sich bekannten Hilfs- und Zusatzstoffen,

dadurch gekennzeichnet, daß als Polyester b) solche verwendet werden, die nach ihrer Herstellung einer kontinuierlichen Destillation bei einer mittleren Verweilzeit von 2 bis 600 s und einer Temperatur von 160 bis 250°C, vorzugsweise 180 bis 230°C, und einem Druck von 0,05 bis 10 mbar, vorzugsweise 0,1 bis 3 mbar, unterworfen worden sind.

Erfindungsgemäß bevorzugt ist, daß

- die Destillation das Polyesters unter Zusatz von 1 bis 5 Gew.-% (bezogen auf Polyester) eines inerten Schleppmittels vom Siedepunkt 150 bis 300°C erfolgte,

- oder daß den Polyestern als Schleppmittel 1-10, vorzugsweise 3-6 Gew.-% eines Diols oder mehrerer Diole aus der Reihe Ethylenglykol, Propylenglykol, Butandiol-1,2 und -1,4, Pentandiol-1,5, 3-Methylpentandiol-1,5, Hexandiol, 2-Ethyl-hexandiol-1,3, Diethylenglykol, Triethylenglykol und Dipropylenglykol/Isomerengemisch) zugesetzt wurde,

- daß der eingesetzte Polyester aus Adipinsäure, Diethylenglykol und Trimethylolpropan bzw. Glycerin hergestellt und als Schleppmittel Diethylenglykol zugesetzt wurde.

Gegenstand der Erfindung ist auch die Verwendung der nach den obengenannten Verfahren erhältlichen foggingarmen Polyesterpolyurethan-Weichschaumstoffe in Verkehrsmitteln, vorzugsweise Automobilen.

Für die Herstellung der Polyesterpolyurethanschaumstoffe werden als Ausgangskomponenten eingesetzt:

a) aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

2

EP 0 579 988 B1

$$Q(NCO)_n \, ,$$

in der

n   2 bis 4, vorzugsweise 2, und

Q   einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasseratoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten, z.B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

b) Ausgangskomponenten sind ferner Polyester mit mindestens zwei Hydroxylgruppen und einem Molekulargewicht in der Regel von 400 bis 10 000. Hierunter versteht man in der Regel 2 bis 4 Hydroxylgruppen aufweisende Verbindungen, speziell solche vom Molekulargewicht 1000 bis 8000, vorzugsweise 2000 bis 4000, z.B. derartige, mindestens 2, in der Regel 2 bis 4, Hydroxylgruppen aufweisende Verbindungen, wie sie für die Herstellung von homogenen und von zellförmigen Polyurethanen an sich bekannt sind und wie sie z.B. in der DE-OS 28 32 253, Seiten 11 bis 18, beschrieben werden.

Anteilig (bis zu 50 Gew.-%, bezogen auf Polyester) können auch mindestens 2 Hydroxylgruppen aufweisende Polyether, Polycarbonate und Polyamide von Molekulargewicht 400 bis 10 000 mitverwendet werden.

c) Als Treibmittel werden Wasser und/oder an sich bekannte leichtsiedende organische Verbindungen verwendet.

d) Ausgangskomponenten sind gegebenenfalls ferner Verbindungen mit mindestens zwei gegenüber Isocyanaten reaktionsfähigen Wasserstoffatomen und einem Molekulargewicht von 32 bis 399. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19 bis 20, beschrieben.

e) Gegebenenfalls mitverwendet werden an sich bekannte Hilfs- und Zusatzstoffe, wie Emulgatoren, Schaumstabilisatoren und Flammschutzmittel. Als Emulgatoren sind solche auf Basis alkoxylierter Fettsäuren und höhere Alkohole bevorzugt.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 28 34 748, 29 17 480 und 36 29 308 beschrieben. Auch die aus der Polyurethanchemie an sich bekannten Katalysatoren wie tert.-Amine und/oder metallorganische Verbindungen können mitverwendet werden.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag , München 1966, z.B. auf den Seiten 103 bis 113 beschrieben.

Durchführung des erfindungsgemäßen Verfahrens:

3

A. Destillation des Polyesters:

Für die Durchführung der Destillation unter Einhaltung der genannten Bedingungen eignen sich in hervorragender Weise handelsübliche Apparate, die unter den Bezeichnungen Fallfilmverdampfer, Dünnschichtverdampfer oder Kurzwegverdampfer vielfältig in der chemischen Industrie Anwendung finden. Wegen der relativ hohen Viskosität der Polyester werden solche Geräte bevorzugt, bei denen das Produkt durch einen Rotor auf der Verdampferfläche gleichmäßig zu einer dünnen Schicht verteilt wird.

Zweckmäßigerweise wird der Polyester vor dem kontinuierlichen Eintragen in das Verdampferaggregat, z.B. mit Hilfe von Wärmeaustauschern, aufgeheizt. Eine weitere Beheizung der Destillationsapparatur kann dann in der Regel entfallen. In einer bevorzugten Ausführungsform wird die destillative Behandlung des Polyesters der Herstellung unmittelbar nachgeschaltet, da in der Endstufe der Fertigung der Polyester ohnehin üblicherweise eine Temperatur von 200 bis 230°C aufweist, und somit weiterer Energieaufwand entfällt.

Nach Verlassen der Destillationsapparatur wird der Polyester rasch auf Temperaturen unter 120°C abgekühlt.

Der Kondensator für das Destillat wird in der Regel je nach Zusammensetzung desselben auf 50 bis 70°C geheizt werden.

Die Effektivität der Destillation kann erhöht werden, wenn dem Polyester vorher eine kleine Menge (1 bis 5 Gew.-%) eines inerten Lösungsmittels vom Kp 150 bis 300°C zugefügt wird, das als Trägerdampf (Schleppmittel) fungiert. Mit Erfolg wurde z.B. Sulfolan eingesetzt.

Nach einer weiteren Ausführungsform wird den Polyestern als Schleppmittel 1-10, vorzugsweis 3-6 Gew.-% eines Diols oder mehrerer Diole aus der Reihe Ethylenglykol, Propylenglykol, Butandiol-1,2 und -1,4, Pentandiol-1,5, 3-Methyl-pentandiol-1,5, Hexandiol, 2-Ethyl-hexandiol-1,3, Diethylenglykol, Triethylenglykol und Dipropylenglykol/Isomerengemisch) zugesetzt.

Ist der eingesetzte Polyester aus Adipinsäure, Diethylenglykol und Trimethylolpropan bzw. Glycerin hergestellt worden, wird als Schleppmittel vorzugsweise Diethylenglykol zugesetzt.

Die folgenden Beispiele erläutern die Erfindung und machen die erreichbaren Fortschritte deutlich:

B. Herstellung der Schaumstoffe:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage.

In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daS das Formteil eine kompakte Haut und einen zelligen Kern aufweist. Erfindungsgemäß kann man in diesem Zusammenhang so vorgehen, daS man in die Form so viel schaumfähiges Reaktionsgemisch einträgt, daß der gebildete Schaumstoff die Form gerade ausfüllt.

Man kann aber auch so arbeiten, daß man mehr schaumfähiges Reaktionsgemisch in die Form einträgt, als zur Ausfüllung des FormInneren mit Schaumstoff notwendig ist. Im letztgenannten Fall wird somit unter "overcharging" gearbeitet; eine derartige Verfahrensweise ist z.B. aus den US-PS 31 78 490 und 31 82 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 21 21 670 und 23 07 589 bekanntgeworden sind.

Selbstverständlich können aber auch Schaumstoffe durch Blockverschäumung hergestellt werden.

Ausführungsbeispiele

Beispiel 1

Zum Einsatz kam der handelsübliche Weichschaumpolyester Desmophen 2200® der Bayer AG, hergestellt aus Adipinsäure, Diethylenglykol und Trimethylolpropan (OH-Zahl: 61,2, Säurezahl 1,4, mittlere Funktionalität ~2,5).

Der Polyester wurde kontinuierlich mit einer Dosierrate von etwa 50 g pro Minute über einen Durchlauferhitzer (Manteltemperatur 170°C) in einen handelsüblichen Kurzwegverdampfer der Fa. Leybold - Typ KDL4 (Material: Glas, Verdampferfläche 0,4 qm, Beheizung mit Wärmeträgeröl von 170°C, Kondensatortemperatur 70°C, Betriebsvakuum 0,4 mbar) eingespeist. Die mittlere Verweilzeit betrug ca. 12 s. Insgesamt wurden 10 kg Polyester in 3 Stunden durchgesetzt.

Es wurden 93,4 g Destillat erhalten. Die OH-Zahl des Polyesters war auf 56,3 abgesunken.

Schaumstoffe aus dem resultierenden Polyester analog Rezeptur IA, IIA und IIIA zeigten eine deutliche Reduzierung des Fogging-Niederschlag gemäß DIN 75 201-Methode B (3,2 bis 3,8 mg).

Beispiel 2

Der Versuch wurde mit dem gleichen Polyester wiederholt; Manteltemperatur von Durchlauferhitzer und Kurzwegverdampfer betrug 200°C. Verweilzeit wie im Beispiel 1.

| Destillationsmenge: | 146 g |
| OH-Zahl: | 55,3. |

Probeschaumstoffe aus dem Polyester analog IA, IIA und IIIA zeigten erheblich bessere Fogging-Werte (2 bis 2,6 mg).

Beispiel 3

Polyester, Durchsatz und Temperatur wie unter Beispiel 2. Dem Polyester wurden vor der Destillation 1,85 Gew.-% Sulfolan zugesetzt (Gesamtmenge 10,95 kg). Verweilzeit 25 s.

| Destillationsmenge: | 416 g Destillat, das zu 48,6 Gew.-% aus Sulfolan bestand (99,9 % der eingesetzten Menge). |

Probeschaumstoffe aus dem resultierenden Polyester analog IA, IIA und IIIA zeigten nur noch sehr geringes fogging (0,6 bis 0,8 mg).

Das Versuchsergebnis zeigt anschaulich die Trägerdampf-Wirkung des Lösemittelzusatzes.

Beispiele 4 bis 7

Die folgenden Beispiele wurden mit dem gleichen Kurzwegverdampfer unter vorherigem Zusatz von Diethylenglykol durchgeführt. Zum Einsatz kam der handelsübliche Weichschaumpolyester Desmophen 2300® der Bayer AG aus Adipinsäure, Diethylenglykol und Trimethylolpropan.

| Beispiel | 4 | 5 | 6 | 7 | DE2300® |
|---|---|---|---|---|---|
| Zusatz Diethylen-glykol (%) | 3 | 3 | 5 | 5 | |
| Durchsatz (kg/h) | 3,07 | 3,24 | 3,26 | 3,24 | |
| Druck (mbar) | 0,03 | 0,7-0,9 | 0,04 | 0,8-1,0 | |
| Temperatur (°C) | 180 | 180 | 180 | 180 | |

**Analytik nach Destillation**

| | | | | | |
|---|---|---|---|---|---|
| Säurezahl | 1,3 | 1,3 | 1,3 | 1,4 | 1,3 |
| OH-Zahl | 48,4 | 50,4 | 50,3 | 53,5 | 51,3 |
| Visk. mPas/25°C | 23400 | 20560 | 21030 | 16720 | 21640 |

Aus den Versuchsergebnissen sind die Vorteile der Zudosierung von Diethylenglykol hinsichtlich der Erhaltung der OH-Zahl ersichtlich.

Aus den Polyestern aus Beispiel 4 und 5 wurden je 3 verschiedene Weichschaumproben hergestellt, die hinsichtlich ihres Fogging-Verhaltens mit Schaummustern aus unbehandeltem Polyester verglichen wurden:

Herstellung von Polvesternolvurethan-Weichschaumstoffen

Die Komponenten werden gemäß den angegebenen Rezepturen intensiv miteinander vermischt und zur Umsetzung gebracht.

Beispiel I A (Vergleich)

100 Gew.-Teile Polyesterpolyol (Desmophen 2300® (Bayer AG)),
3,1 Gew.-Teile Wasser
1,2 Gew.-Teile Dimethylbenzylamin
1,5 Gew.-Teile Stabilisator SE 232 (UCC)
18 Gew.-Teile Toluylendiisocyanat (2,4/2,6-Isomeres im Verhältnis 80/20 Gew.-%)
18 Gew.-Teile Toluylendiisocyanat (2,4/2,6-Isomeres im Verhältnis 65/35 Gew.-%)

Beispiel II A (Vergleich)

100 Gew.-Teile Polyesterpolyol gemäß I A
2,4 Gew.-Teile Wasser
1,4 Gew.-Teile N-Methylmorpholin
1,0 Gew.-Teile Dispergiermittel EM, (Bayer AG)
1,0 Gew.-Teile Zusatzmittel TX, (Bayer AG)
30 Gew.-Teile Toluylendiisocyanat (2,4/2,6-Isomeres im Verhältnis 80/20 Gew.-%)

Beispiel III A (Vergleich)

100 Gew.-Teile Polyesterpolyol gemäß I A
3,6 Gew.-Teile Wasser
1,4 Gew.-Teile N-Methylmorpholin
0,05 Gew.-Teile Desmorapid® PV, (Bayer AG)
2,0 Gew.-Teile Dispergiermittel EM, (Bayer AG)

1,5 Gew.-Teile Zusatzmittel TX, (Bayer AG)
41,1 Gew.-Teile Toluylendiisocyanat (2,4/2,6-Isomeres im Verhältnis 80/20 Gew.-%)

Beispiel I B (erfindungsgemäß)

100 Gew.-Teile Polyester gemäß Beispiel 4
3,1 Gew.-Teile Wasser
1,2 Gew.-Teile Dimethylbenzylamin
1,5 Gew.-Teile Stabilisator SE 232 (UCC)
18 Gew.-Teile Toluylendiisocyanat (2,4/2,6-Isomeres im Verhältnis 80/20 Gew.-%)
18 Gew.-Teile Toluylendiisocyanat (2,4/2,6-Isomeres im Verhältnis 65/35 Gew.-%)

Beispiel II B

100 Gew.-Teile Polyester gemäß Beispiel 4
2,4 Gew.-Teile Wasser
1,4 Gew.-Teile N-Methylmorpholin
1,0 Gew.-Teile Dispergiermittel EM (Bayer AG)
1,0 Gew.-Teile Zusatzmittel TX (Bayer AG)
30 Gew.-Teile Toluylendiisocyanat (2,4/2,6-Isomeres im Verhältnis 80/20 Gew.-%)

Beispiel III B

100 Gew.-Teile Polyester gemäß Beispiel 4
3,6 Gew.-Teile Wasser
1,4 Gew.-Teile N-Methylmorpholin
0,05 Gew.-Teile Desmorapid® PV (Bayer AG)
2,0 Gew.-Teile Dispergiermittel EM (Bayer AG)
1,5 Gew.-Teile Zusatzmittel TX (Bayer AG)
41,1 Gew.-Teile Toluylendiisocyanat (2,4/2,6-Isomeres im Verhältnis 80/20 Gew.-%)
Beispiel IC wie IB, jedoch mit Polyester gemäß Beispiel 5
Beispiel IIC wie IIB, jedoch mit Polyester gemäß Beispiel 5
Beispiel IIIC wie IIIB, jedoch mit Polyester gemäß Beispiel 5

Fogginatest an den erhaltenen Polyesterpolyurethan-Weichschaumstoffen gemäß DIN 75 201 - Methode B

Zur Beurteilung der Foggingeigenschaften von Werkstoffen der Kfz.-Innenausstattung dient die DIN 75 201. Sie beschreibt zwei Methoden:

Methode A - reflektometrische Methode, Restglanzmessung.

Ein Materialprüfkörper der Abmessungen 80 mm Durchmesser und 10mm Dicke wird in einem thermostatisierten Gefäß (100°C), welches mit einer besonders gereinigten und ebenfalls thermostatisierten Glasplatte (20°C) abgedichtet ist, drei Stunden gelagert.
In dem Temperaturintervall 20 bis 100°C verdampf- und kondensierbare niedermolekulare Bestandteile schlagen sich auf der gekühlten Glasplatte nieder und vermindern den Reflexionsgrad im Vergleich zu einer Nullprobe.

Methode B - gravimetrische Methode

Ein Prüfkörper gleicher Abmessungen wird 16 Stunden in der unter A. beschriebenen Apparatur gelagert. Als Kondensationsfläche wird eine gekühlte Alu-Folie (20°C) verwendet, auf der mittels Differenzwägung die kondensierte Masse abzüglich des absorbierten Wassers bestimmt wird.

| Beispiel | Niederschlag (mg) | Rohdichte (kg m$^{-3}$) |
|---|---|---|
| I A | 7,2 | 35 |
| II A | 8,5 | 44 |
| III A | 6,3 | 31 |
| I B | 0,9 | 35 |
| II B | 0,5 | 44 |
| III B | 0,5 | 31 |
| I C | 2,8 | 35 |
| II C | 3,5 | 44 |
| III C | 2,9 | 31 |

Diese Ergebnisse zeigen deutlich, daß nach dem erfindungsgemäßen Verfahren foggingarme Polyesterpolyurethanweichschaumstoffe erhalten werden.

**Patentansprüche**

1. Verfahren zur Herstellung von foggingarmen Polyesterpolyurethan-Weichschaumstoffen durch Umsetzung von

    a) Polyisocyanaten mit

    b) mindestens zwei Hydroxylgruppen aufweisenden Polyestern vom Molekulargewicht 400 bis 10 000 in Gegenwart von

    c) Wasser und/oder leicht flüchtigen organischen Verbindungen als Treibmittel und gegebenenfalls in Gegenwart von

    d) mindestens zwei aktive Wasserstoffatome aufweisenden Verbindungen vom Molekulargewicht 32 bis 400 als Kettenverlängerungs- und Vernetzungsmitteln sowie gegebenenfalls von

    e) an sich bekannten Hilfs- und Zusatzstoffen,

    dadurch gekennzeichnet, daß als Polyester b) solche verwendet werden, die nach ihrer Herstellung einer kontinuierlichen Destillation bei einer mittleren Verweilzeit von 2 bis 600 s und einer Temperatur von 160 bis 250 ° C, vorzugsweise 180 bis 230 ° C, und einem Druck von 0,05 bis 10 mbar, vorzugsweise 0,1 bis 3 mbar, unterworfen worden sind.

2. Verfahren gemäß Anspruch 1, dadurch gekennzeichnet, daß die Destillation des Polyesters unter Zusatz von 1 bis 5 Gew.-% (bezogen auf Polyester) eines inerten Lösungsmittels vom Siedepunkt 150 bis 300 ° C als Schleppmittel erfolgte.

3. Verfahren nach Anspruch 1, dadurch gekennzeichnet, daß die Destillation des Polyesters unter Zusatz von 1-10, vorzugsweise 3-6 Gew.-% eines Diols oder mehrerer Diole aus der Reihe Ethylenglykol, Propylenglykol, Butandiol-1,2 und -1,4, Pentandiol-1,5, 3-Methyl-pentandiol-1,5, Hexandiol, 2-Ethyl-hexandiol-1,3, Diethylenglykol, Triethylenglykol und Dipropylenglykol/Isomerengemisch) erfolgte.

4. Verfahren nach Anspruch 1 und 3, dadurch gekennzeichnet, daß der eingesetzte Polyester aus Adipinsäure, Diethylenglykol und Trimethylolpropan bzw. Glycerin hergestellt wurde und das zugesetzte Schleppmittel Diethylenglykol ist.

5. Verwendung der nach den Verfahren gemäß Ansprüchen 1 bis 4 erhältlichen foggingarmen Polyesterpolyurethan-Weichschaumstoffe in Verkehrsmitteln, vorzugsweise Automobilen.

**Claims**

1. A process for the production of low-fog flexible polyester polyurethane foams by reaction of

    a) polyisocyanates with

    b) polyesters containing at least two hydroxyl groups and having a molecular weight in the range from 400 to 10,000 in the presence of

    c) water and/or readily volatile organic compounds as blowing agents and optionally in the presence of

    d) compounds containing at least two active hydrogen atoms and having a molecular weight in the range from 32 to 400 as chain-extending and crosslinking agents and optionally in the presence of

e) auxiliaries and additives known per se,

characterized in that the polyesters b) used are polyesters which have been subjected after production to continuous distillation over an average holding time of 2 to 600 s at a temperature of 160 to 250°C and preferably 180 to 230°C and under a pressure of 0.05 to 10 mbar and preferably 0.1 to 3 mbar.

2. A process as claimed in claim 1, characterized in that distillation of the polyester was carried out in the presence of 1 to 5% by weight (based on polyester) of an inert solvent boiling at 150 to 300°C as entraining agent.

3. A process as claimed in claim 1, characterized in that distillation of the polyester was carried out with addition of 1 to 10% by weight and preferably 3 to 6% by weight of one or more diols from the group consisting of ethylene glycol, propylene glycol, butane-1,2- and -1,4-diol, pentane-1,5-diol, 3-methylpentane-1,5-diol, hexanediol, 2-ethylhexane-1,3-diol, diethylene glycol, triethylene glycol and dipropylene glycol/isomer mixture).

4. A process as claimed in claims 1 and 3, characterized in that the polyester used was prepared from adipic acid, diethylene glycol and trimethylol propane or glycerol and the entraining agent added is diethylene glycol.

5. The use of the low-fog flexible polyester polyurethane foams obtainable by the process claimed in claims 1 to 4 in vehicles, preferably automobiles.

**Revendications**

1. Procédé de fabrication de mousses souples en polyester-polyuréthanne peu susceptibles d'un embuage par réaction

a) de polyisocyanates avec

b) des polyesters présentant au moins deux groupements hydroxyle, de masse moléculaire comprise entre 400 et 10 000, en présence

c) d'eau et/ou de composés organiques très volatils en tant que carburant et, le cas échéant, en présence

d) de composés présentant au moins 2 atomes d'hydrogène actifs, de masse moléculaire comprise entre 32 et 400 en tant qu'agents d'allongement de chaîne et de réticulation, ainsi que, le cas échéant,

e) de produits auxiliaires de laboratoire et d'additifs connus en soi,

caractérisé en ce qu'on utilise, en tant que polyesters b), ceux qui ont été soumis, après leur préparation, à une distillation continue avec un temps de séjour moyen compris entre 2 et 600 s et une température comprise entre 160 et 250°C, de préférence entre 180 et 230°C, et avec une pression comprise entre 0,05 et 10 mbar, de préférence entre 0,1 et 3 mbar.

2. Procédé selon la revendication 1, caractérisé en ce que la distillation du polyester a lieu en ajoutant de 1 à 5 % en masse (par rapport au polyester) d'un solvant inerte de point d'ébullition compris entre 150 et 300°C en tant qu'entraîneur.

3. Procédé selon la revendication 1, caractérisé en ce que la distillation du polyester se produit en ajoutant de 1 à 10, de préférence de 3 à 6 % en masse d'un diol ou de plusieurs diols provenant du groupe éthylèneglycol, propylène-glycol, butanediol-1,2 et butanediol-1,4, pentanediol-1,5, 3-méthylpentanediol-1,5, hexanediol, 2-éthylhexanediol-1,3, diéthylèneglycol, triéthylèneglycol et dipropylèneglycol (mélange d'isomères).

4. Procédé selon les revendications 1 et 3, caractérisé en ce qu'on a préparé le polyester utilisé à partir d'acide adipique, de diéthylèneglycol et de triméthylolpropane ou, le cas échéant, de glycérol et que l'entraîneur ajouté est le diéthylèneglycol.

5. Utilisation des mousses souples en polyester-polyuréthanne peu susceptibles d'un embuage, qu'on peut obtenir d'après le procédé selon les revendications 1 à 4, pour des moyens de transport, de préférence pour des automobiles.